# EUROPÄISCHE PATENTSCHRIFT

(11) **EP 0 925 540 B1**
(45) Veröffentlichungstag und Bekanntmachung des Hinweises auf die Patenterteilung: **03.05.2000**
(21) Anmeldenummer: 97935476.8
(22) Anmeldetag: 24.07.1997
(51) Int. Cl.: G06F 9/46

(54) **SYNCHRONISATIONSVERFAHREN**
METHOD OF SYNCHRONIZATION
PROCEDE DE SYNCHRONISATION

(30) Priorität: 04.09.1996 DE 19635915
(43) Veröffentlichungstag der Anmeldung: 30.06.1999
(73) Patentinhaber: Siemens Nixdorf Informationssysteme AG, 33106 Paderborn (DE)
(72) Erfinder: KREUZBURG, Rainer, D-33102 Paderborn (DE)
(74) Vertreter: Epping, Wilhelm, Dr.-Ing.
(86) Internationale Anmeldenummer: DE9701564
(87) Internationale Veröffentlichungsnummer: WO9810347

(56) Entgegenhaltungen:
- HERLIHY M P ET AL: "LOCK-FREE GARBAGE COLLECTION FOR MULTIPROCESSORS" IEEE TRANSACTIONS ON PARALLEL AND DISTRIBUTED SYSTEMS, Bd. 3, Nr. 3, 1.Mai 1992, Seiten 304-311, XP000274361
- ARENSTORF N S ET AL: "COMPARING BARRIER ALGORITHMS" PARALLEL COMPUTING, Bd. 12, Nr. 2, November 1989, Seiten 157-180, XP000054814
- "BARRIER SYNCHRONIZATION USING FETCH-AND-ADD AND BROADCAST" IBM TECHNICAL DISCLOSURE BULLETIN, Bd. 34, Nr. 8, 1.Januar 1992, Seiten 33-34, XP000302036

## Beschreibung

### Technisches Gebiet

Das Verfahren betrifft die Synchronisation von Prozessen in Multiprozessorsystemen.

### Stand der Technik

In Datenverarbeitungssystemen mit mehreren Prozessen ist ein bekanntes Problem das der Synchronisation von Prozessen. Hierzu werden bislang als Semaphoren bezeichnete gemeinsame Speicherstellen verwendet. Diese müssen jedoch durch spezielle, nicht unterbrechbare oder die Unterbrechung erkennbar machende Maschinenbefehle behandelt werden. Dieses Problem ist in vielen Veröffentlichungen behandelt, z.B. im Kapitel 2.2 "Interprocess Communication" des Buchs "Operating Systems: Design and Implementation" von Andrew S. Tanenbaum, Verlag Prentice-Hall 1987.

Insbesondere in Multiprozessorsystemen stellt jedoch die Bereitstellung eines passenden, nicht unterbrechbaren Befehls ein Problem dar. Auch ist eine Unterstützung dieser Befehle in den üblichen Programmiersprachen nicht vorgesehen. Daher sind auch Synchronisationsverfahren bekannt, bei denen lediglich verlangt wird, daß ein Lade- oder Speicherbefehl atomar erfolgt. Die hierzu bekannten Verfahren sind beispielsweise in Kapitel 3 des Buchs "Principles of Concurrent and Distributed Programming" von M. Ben-Ari, Prentice-Hall 1990, ISBN 0-13-711821-X, beschrieben.

Die dort beschriebenen Verfahren lösen die Aufgabe, daß ein Betriebsmittel immer nur von einem Prozess gleichzeitig benutzt werden kann und alle anderen Prozesse warten, bis sie "an der Reihe" sind.

Beim Systemanlauf von Mehrprozessorsystemen stellt sich jedoch das anders geartete Problem einer phasenmäßigen Synchronisation nebenläufiger Prozesse. Hierbei können die Anlaufprozesse auf den einzelnen Prozessoren zwar gleichzeitig ablaufen, bestehen jedoch aus mehreren Phasen, die möglichst gleichzeitig ablaufen sollen, aber kein Anlaufprozess soll die nächste Phase beginnen, bevor nicht alle anderen Prozesse die aktuelle Phase abgeschlossen haben.

Aufgabe der Erfindung ist es daher, ein Betriebsverfahren anzugeben, das eine Anzahl von nebenläufigen Prozessen in Multiprozessorsystemen phasenmäßig zu synchronisieren vermag, möglichst ohne daß ein spezieller Befehl benötigt wird.

### Darstellung der Erfindung

Die Erfindung löst diese Aufgabe, indem jedem Prozess vor dessen Start ein eigenes Speicherwort zugeordnet wird, das nur von diesem Prozess verändert, jedoch von allen anderen beteiligten Prozessen gelesen werden kann. Dieses Speicherwort wird bei jedem Sychronisationsschritt zweimal erhöht. Ein Prozess wartet vor jeder Erhöhung, bis das ihm zugeordnete Speicherwort kleiner oder gleich den Werten in den anderen Speicherworten ist.

### Kurzbeschreibung der Zeichnungen

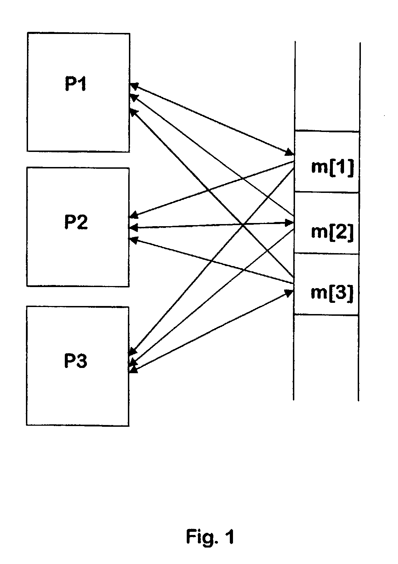

Es zeigt
- Fig. 1: drei Prozesse, deren Zugriff auf die Synchronisationsspeicherwörter durch Pfeile angedeutet ist.

### Beschreibung der Erfindung

Die Erfindung wird beschrieben am Beispiel eines Multiprozessorsystems mit gemeinsamem, kohärenten Speicher.

Während des Systemstarts werden auf allen Prozessoren Betriebsprozesse gestartet, welche in mehreren Phasen die Betriebsmittel bestimmen und verwalten sowie Prüfungen durchführen, um eine korrekte Funktion sicherzustellen. Diese Phasen sollen derart synchron ablaufen, daß jeder Prozess nur dann die nächste Phase beginnt, wenn alle anderen Prozesse die vorherige Phase abgeschlossen haben.

Zu diesem Zweck benutzt jeder Prozess ein eigenes Speicherwort, das nur von diesem Prozess verändert, jedoch von allen anderen Prozessen gelesen werden kann. In Fig. 1 sind als Illustration drei Prozesse P1, P2 und P3 dargestellt, denen die Speicherwörter m[1], m[2] und m[3] zugeordnet sind und durch die Pfeilspitzen angedeutet ist, daß nur der Prozeß P1 das Speicherwort m[1] schreiben kann, die anderen Prozesse P2 und P3 dieses jedoch lesen könne. Jedes der Speicherwörter m[1], m[2] und m[3] wird bei Beginn der Prozesse auf Null gesetzt, beispielsweise von der die Prozesse startenden Einrichtung. Dies kann ein Initialisierungsprozess sein, der auf einer der Prozessoren aktiv ist, die Speicherstellen gemäß vorher bestimmter Zuordnung auf Null setzt und dann über eine Signaleinrichtung der Steuerung der Prozessoren eine Startadresse sowie eine Nachricht übermittelt, daß die Startblockierung aufzuheben sei.

Nach den üblichen Initialisierungsschritten eines jeden Prozesses wird die erste zu synchronisierende Phase begonnen, indem jeder Prozessor sein eigenes Speicherwort inkrementiert. Am Ende der Phase wird dann von jedem Prozess überprüft, ob alle anderen Prozesse bereits diese erste Phase begonnen haben. Dies ist dadurch erkennbar, daß deren Speicherwörter die Zahl 1 enthalten. Sofern dies noch nicht der Fall ist, d.h. mindestens eines der Speicherwörter noch den Wert 0 hat als Anzeichen dafür, daß dieser Prozess die erste Phase noch nicht begonnen hat, muß gewartet werden. Ist es hingegen der Fall, daß die anderen Speicherwörter nicht kleineren Inhalt haben, dann inkrementiert der Prozessor sein eigenes Speicherwort, welches damit den Wert 2 annimmt. Da dies alle Prozesse durchführen, wird dieses für alle Speicherwörter zutreffen, kurz nachdem alle Prozesse diese erste Phase beendet haben. Es sei darauf hingewiesen, daß, nachdem der erste Prozess sein Speicherwort von 1 auf 2 erhöht hat, die anderen Prozesse, die zuvor ein Speicherwort mit 0 und die anderen mit 1 "gesehen" haben, nunmehr ein Speicherwort mit 2 und die anderen mit 1 "sehen", wobei es vom Zufall abhängt, ob das Speicherwort mit 2 dasjenige mit zuvor 0 oder eines der anderen ist.

Vor Beginn der nächsten zu synchronisierenden Phase wird in gleicher Art wie zuvor überprüft, daß alle anderen Speicherwörter nicht kleiner sind als das eigene. Im Beispiel hat das eigene den Wert 2 als Anzeichen, daß die erste Phase beendet wurde. Würde sich ein anderer Prozess noch in der ersten Phase befinden, würde dessen Speicherwort noch den Wert 1 aufweisen, und der Prozess mit dem Wert 2 in seinem Speicherwort müßte warten. Sind hingegen alle anderen Speicherwörter gleich oder größer, kann jeder Prozess die zweite Phase beginnen, indem er sein eigenes Speicherwort auf den Wert 3 setzt. Am Ende dieser zweiten Phase wird wieder überprüft, daß alle Prozesse diese zweite Phase begonnen, d.h. den Wert 3 in ihrem Speicherwort haben, und erst dann die zweite Phase durch Erhöhung auf 4 abgeschlossen wird, wenn alle anderen Prozesse mindestens den Wert 3 erreicht und damit die zweite Phase begonnen haben.

Dieser Ablauf in der bevorzugten Ausführungsform kann als Pseudocode dargestellt werden, wobei mit m[i] die Speicherstelle des i-ten Prozessors, im folgenden auch kurz Meilenstein genannt, bezeichnet werde. "j" ist die Nummer des ausführendens Prozessors, so daß m[j] den eigenen Meilenstein darstellt. Die Programme auf jedem der Prozessoren, die durchaus alle identisch sein können, aber nicht müssen, enthalten eine Funktion s_wait() wie folgt:

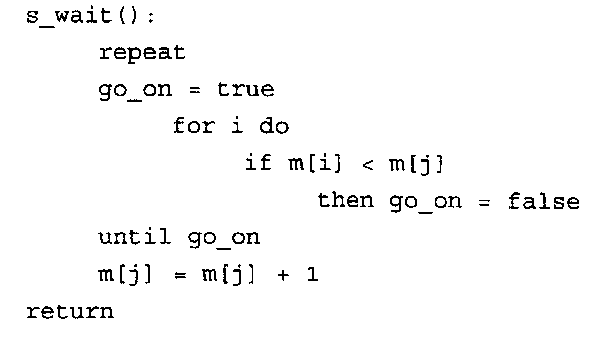

Diese Funktion wartet also durch wiederholte Abfrage solange, bis die Meilensteine aller anderen Prozessoren mindestens den gleichen Wert wie der eigenen Meilenstein haben. In der Regel werden sie alle den gleichen Wert haben. Da jedoch dieser Zustand gleichzeitig jedem Prozess es erlaubt, den Meilenstein zu erhöhen, ist eine Abfrage auf Gleichheit nicht richtig.

Zur Synchronisation zwischen dem Ende der einen und dem Beginn der nächsten Phase dient eine Funktion l_sync(), in der lediglich die Funktion s_wait() zweimal aufgerufen wird:

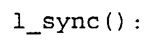

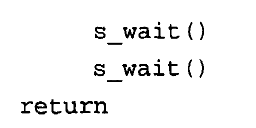

Jeder Prozess hat damit in etwa die folgende Struktur:

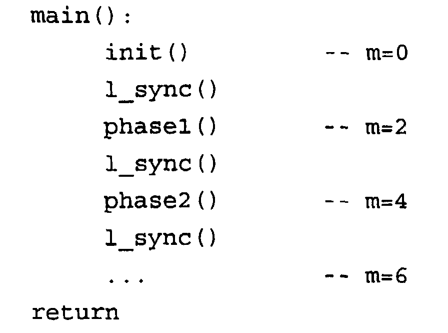

Hinter dem Doppelstrich als Kommentarzeichen ist jeweils der Wert des eigenen Meilensteins angegeben, wie er während der Ausführung einer Phase vorliegt. Gegenüber der vorherigen Beschreibung ist der Wert um eins höher, da zur Vereinfachung der Programmierung zu Begin ein überflüssiger Synchronisationsschritt durchgeführt wird.

Diese Ausführungsform ist besonders günstig, wenn identischer Programmcode gleichzeitig auf verschiedenen Prozessoren ausgeführt wird, aber die einzelnen Phasen synchronisiert nacheinander ablaufen sollen.

Die Synchronisationsfunktion s_wait() kann aber auch auch einzeln eingesetzt werden. Hierzu wird, entsprechend der obigen ersten Darstellung, jeder ungerade Wert m eines Meilensteins angesehen als "Phase (m+1) mod 2 begonnen" und jeder gerade Wert als "Phase m mod 2 beendet" angesehen. Es ist dann ohne weiteres möglich, daß jeder Prozess zwischen zwei synchronisierten Phasen weitere Befehle ausführt, für die es ohne Bedeutung ist, ob sie sich mit einem anderen Prozess überlappen, der sich in der vorigen oder der nächsten Phase befindet.

Es zeigt sich also, daß durch den Synchronisationsschritt s_wait() sichergestellt wird, daß alle anderen Prozesse eine Meilenstein-Nummer besitzen, die entweder unmittelbar vor (um eins kleiner) , oder genau (gleich) oder unmittelbar nach (um eins größer) der jeweils aktuellen Meilenstein-Nummer liegt. Zwar ist ferner bekannt, daß, solange einer der anderen Meilenstein-Nummern unterhalb der eigenen Nummer liegt, keiner gleichzeitig oberhalb liegen kann. Da sich dieser Zustand aber jederzeit asynchron ändern kann, kann diese Bedingung bei dem nächsten Zugriff schon verletzt sein. Ist hingegen einer der anderen Meilensteine größer als der eigene, dann bleibt dieser Zustand erhalten, bis der eigene Meilenstein inkrementiert wird.

Damit kann eine Prüfung auf korrekte Synchronisation erfolgen, indem zum Vergleich die Differenz gebildet wird. Diese darf nur einen der drei Werte "0", "1" und "-1" annehmen. Andernfalls ist ein Synchronisationsfehler aufgetreten, so daß ein Fehlersignal erzeugt wird und beispielsweise der Systemanlauf mit einer Fehlermeldung für den Service-Techniker abgebrochen wird.

Der bislang dargestellt Ablauf stellte einen Fall dar, bei dem eine relativ geringe und vorab bestimmte Anzahl von Phasen zu synchronisieren ist, so daß ein Speicherwort zum Zählen ausreicht, ohne daß ein Überlauf erfolgt. Es ist jedoch auch möglich, die Erfindung anzuwenden, wenn einige der Phasen iterativ wiederholt werden und damit die Anzahl nicht vor Start eines jeden Prozesses bekannt ist.

Hierbei wird anstelle einer als unendlich gedachten Folge von natürlichen Zahlen lediglich der Rest einer Division durch einen gemeinsamen Modul verwendet. Diese kann sehr effizient in der Binärdarstellung einer Zahl dadurch erfolgen, daß das Ergebnis einer arithmetischen Operation, hier der Erhöhung um Eins, bei einer dem Modul entsprechenden Anzahl von Binärstellen abgeschnitten wird. Bei einem Modul von "8" beispielsweise lautet dann die Folge der Zahlenwerte "0", "1", "2", "3", "4", "5", "6", "7", "0", "1", ... . Demgemäß ist beim Vergleich darauf zu achten, daß der Inhalt einer Speicherstelle vom Maximalwert, hier "7", auf Null wechselt. Damit ist im Sinne des für dieses Verfahren notwendigen Vergleichs "7" zwar weiterhin größer als "4", "5" und "6", jedoch kleiner als "0", "1" und "2". Dies zeigt folgende Tabelle:

| | 0 | 1 | 2 | 3 | 4 | 5 | 6 | 7 |
|---|---|---|---|---|---|---|---|---|
| 0 | = | < | < | < | ? | > | > | > |
| 1 | < | = | > | > | > | ? | < | < |
| 2 | < | < | = | > | > | > | ? | < |
| 3 | < | < | < | = | > | > | > | ? |
| 4 | ? | < | < | < | = | > | > | > |
| 5 | > | ? | < | < | < | = | > | > |
| 6 | > | > | ? | < | < | < | = | > |
| 7 | > | > | > | ? | < | < | < | = |

Die Einträge mit Fragezeichen sind für das Verfahren ohne Bedeutung.

Bildet man die Modulo-Differenz, so ergibt sich:

| | 0 | 1 | 2 | 3 | 4 | 5 | 6 | 7 |
|---|---|---|---|---|---|---|---|---|
| 1 | 7 | 0 | 1 | 2 | 3 | 4 | 5 | 6 |
| 2 | 6 | 7 | 0 | 1 | 2 | 3 | 4 | 5 |
| 3 | 5 | 6 | 7 | 0 | 1 | 2 | 3 | 4 |
| 4 | 4 | 5 | 6 | 7 | 0 | 1 | 2 | 3 |
| 5 | 3 | 4 | 5 | 6 | 7 | 0 | 1 | 2 |
| 6 | 2 | 3 | 4 | 5 | 6 | 7 | 0 | 1 |
| 7 | 1 | 2 | 3 | 4 | 5 | 6 | 7 | 0 |

Damit zeigt sich, daß für dieses Verfahren die Modul-Differenz mit dem halben Modul (hier "4") verglichen wird und dieses Vergleichsergebnis genommen wird. Auch hier sind bei korrektem Ablauf nur die Werte "0", "1" und "7" entsprechend "-1" möglich.

Anstelle einer Subtraktion von zwei Meilensteinwerten kann auch das Inkrement zu einem Meilensteinwert addiert oder von diesem subtrahiert werden, so daß die Funktion s_wait() lauten würde:

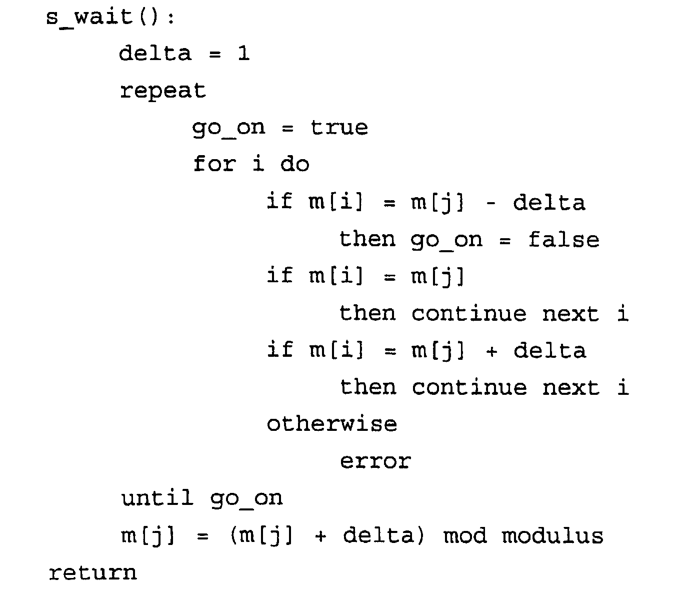

Die Modulofunktion in der vorletzten Zeile wird zweckmäßig durch Abschneiden der Binardarstellung erreicht. Der Wert von "delta" kann auch ungleich 1, z.B. 16, sein, ohne daß das Verfahren beeinträchtigt wird, solange es ein Faktor des Modulus ist. Ein Prozessor kann dann auf einfache Art einen Fehler signalisieren, indem er einen Fehlerwert kleiner als den "delta"-Wert zu seinem Meilenstein addiert; der Ablauf wird damit leicht erkennbar blockiert.

Weitere Varianten sind gemäß den bekannten Techniken des Programmierens möglich.

## Patentansprüche

1. Verfahren zur Synchronisation von mindestens zwei nebenläufigen, in einer Datenverarbeitungsanlage ablaufenden Prozessen (P1, P2, P3) dadurch, daß
- jedem Prozess eine eigene Speicherstelle (Meilenstein, m[1], m[2], m[3]) zugeordnet ist, welche nur von diesem Prozess verändert wird, jedoch von allen zu synchronisierenden Prozessen gelesen werden kann;
- die möglichen Inhalte der Speicherstellen eine, von allen Prozessen gleich interpretierte, geordnete Folge bilden, deren Elemente demgemäß dahingehend verglichen werden können, ob der Inhalt einer ersten Speicherstelle kleiner als der Inhalt einer zweiten Speicherstelle ist,
- ein Synchronisationsschritt darin besteht, daß jeder Prozess seine eigene Speicherstelle mit allen anderen Speicherstellen vergleicht und der Synchronisationsschritt als erfolgt gilt, wenn keine der anderen Speicherstellen einen Wert aufweist, der kleiner als der Wert seiner eigenen Speicherstelle ist,
- im Falle eines erfolgreichen Synchronisationsschrittes die dem Prozess zugeordnete Speicherstelle von diesem auf das nächste Element der Folge gesetzt wird.

2. Verfahren nach Anspruch 1, wobei eine Synchronisation von Phasenschritten der Prozesse durch jeweils zwei unmittelbar aufeinanderfolgende Synchronisationsschritte erfolgt.

3. Verfahren nach einem der Ansprüche 1 oder 2, wobei als geordnete Folge die Folge ganzen Zahlen in der Binärdarstellung einer Speicherstelle verwendet wird.

4. Verfahren nach einem der Ansprüche 1 oder 2, wobei als geordnete Folge die Residuen einer Folge von natürlichen Zahlen modulo eines Moduls verwendet wird und eine erste Zahl kleiner als eine zweite Zahl ist, wenn die Differenz der Residuen kleiner als die Hälfte des Moduls ist.

5. Verfahren nach einem der Ansprüche 1 bis 4, wobei der Vergleich durch Bildung einer Differenz erfolgt und ein Fehlersignal erzeugt wird, wenn die Differenz anders als 0, 1 oder -1 ist.

6. Verfahren nach einem der Ansprüche 1 bis 4, wobei der Vergleich durch Addition bzw. Subtraktion der vorgegebenen Differenz zwischen zwei Zahlen der Folge zu einem der beiden zu vergleichenden Speicherstellen erfolgt, das Ergebnis mit der anderen Speicherstelle auf Gleichheit verglichen wird und ein Fehlersignal erzeugt wird, wenn weder das Ergebnis noch die eine Speicherstelle zu der anderen gleich ist.

## Claims

1. Method for synchronization of at least two concurrently running processes (P1, P2, P3) which run in a data processing system, in that
- each process is assigned its own memory location (milestone, m[1], m[2], m[3]) which is changed only by this process but can be read by all the processes to be synchronized;
- the possible contents of the memory locations for an ordered sequence which is interpreted in the same way by all the processes and whose elements can be compared to determine whether the contents of a first memory location are less than the contents of a second memory location,
- a synchronization step consists in that each process compares its own memory location with all the other memory locations and the synchronization step is regarded as having been carried out when none of the other memory locations has a value which is less than the value of its own memory location,
- in the case of a successful synchronization step, the memory location which is assigned to the process is set by this process to the next element in the sequence.

2. Method according to Claim 1, in which phase steps of the processes are synchronized by in each case two immediately successive synchronization steps.

3. Method according to one of Claims 1 or 2, in which the sequence of integers in the binary representation of a memory location is used as the ordered sequence.

4. Method according to one of Claims 1 or 2, in which the residues of a sequence of natural numbers modulo a modulus are used as the ordered sequence, and a first number is less than a second number if the difference between the residues is less than half the modulus.

5. Method according to one of Claims 1 to 4, in which the comparison is carried out by forming a difference and an error signal is produced if the difference is other than 0, 1 or -1.

6. Method according to one of Claims 1 to 4, in which the comparison is carried out by addition or subtraction of the predetermined difference between two numbers in the sequence for one of the two memory locations to be compared, the result is compared for equality with the other memory location, and an error signal is produced if neither the result nor the one memory location is equal to the other.

## Revendications

1. Procédé pour la synchronisation d'au moins deux processus (P1, P2, P3) s'exécutant les uns à côté des autres dans une installation de traitement de données, dans lequel
- il est associé à chaque processus une position en mémoire particulière (borne m[1], m[2], m [3]) qui n'est modifiée que par ce processus mais qui peut être lue par tous les autres processus à synchroniser,
- les contenus possibles des positions en mémoire forment une suite ordonnée, interprétée de la même manière par tous les autres processus et dont les éléments peuvent alors être comparés pour savoir si le contenu d'une première position en mémoire est inférieur au contenu d'une deuxième position en mémoire,
- une étape de synchronisation consiste en ce que chaque processus compare sa propre position en mémoire à toutes les autres positions en mémoire et en ce que l'étape de synchronisation est considérée comme effectuée lorsque aucune des autres positions en mémoire n'a une valeur qui est inférieure à la valeur de sa propre position en mémoire,
- dans le cas d'une étape de synchronisation effectuée avec succès, la position en mémoire associée au processus est mise par ce dernier sur le prochain élément de la suite.

2. Procédé selon la revendication 1, dans lequel une synchronisation d'étapes de phases des processus s'effectue au moyen à chaque fois de deux étapes de synchronisation se succédant immédiatement.

3. Procédé selon l'une des revendications 1 ou 2, dans lequel on utilise comme suite ordonnée la suite de nombres entiers dans la représentation binaire d'une position en mémoire.

4. Procédé selon l'une des revendications 1 ou 2, dans lequel on utilise comme suite ordonnée les résidus d'une suite de nombres naturels modulo un module et dans lequel un premier nombre est inférieur à un deuxième nombre lorsque la différence des résidus est inférieure à la moitié du module.

5. Procédé selon l'une des revendications 1 à 4, dans lequel on effectue la comparaison en formant une différence et on produit un signal d'erreur lorsque la différence est différente de 0, 1 ou - 1.

6. Procédé selon l'une des revendications 1 à 4, dans lequel on effectue la comparaison en additionnant ou soustrayant la différence prédéterminée entre deux nombres de la suite avec l'une des deux positions en mémoire à comparer, on compare le résultat à l'autre position en mémoire pour tester l'égalité et on produit un signal d'erreur lorsque ni le résultat ni la position en mémoire n'est égal à l'autre position en mémoire.
